(19) Europäisches Patentamt
European Patent Office
Office européen des brevets

(11) **EP 2 046 004 A1**

(12) **EUROPEAN PATENT APPLICATION**

(43) Date of publication:
**08.04.2009 Bulletin 2009/15**

(51) Int Cl.:
***H04M 3/30*** (2006.01)

(21) Application number: **07291200.9**

(22) Date of filing: **03.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventors:
• **Peeters, Michael**
**1742 Ternat (BE)**

• **Guenach, Mamoun**
**1830 Machelen (BE)**
• **Maes, Jochen**
**2431 Veerle (BE)**

(74) Representative: **Narmon, Gisèle Marie Thérèse et al**
**Alcatel-Lucent Bell NV**
**Copernicuslaan 50**
**2018 Antwerpen (BE)**

(54) **Method and apparatus for estimating crosstalk**

(57)     The present invention relates to a method for estimating a first parameter ($|H12(f)|$, $arg(H12(f))$) that characterizes a first crosstalk channel (XCHDS12) from a first transmission medium (12b) towards a second transmission medium (12a) in a first direction of communication (DS).

A method according to the invention further comprises the steps of:
- estimating a second a like parameter ($|G21(f)|$, $arg(G21(f))$) that similarly characterizes a second crosstalk channel (XCHUS21) from the second transmission medium towards the first transmission medium in a second opposite direction of communication (US) and at a first frequency index (f1), thereby yielding a first parameter value ($|G21(f1)|$, $arg(G21(f1))$),
- estimating the second parameter at a second distinct frequency index (f2), thereby yielding a second parameter value ($|G21(f2)|$, $arg(G21(f2))$),
- deriving a value ($|H12(f3)|$, $arg(H12(f3))$) for the first parameter at a third distinct frequency index (f3) from the first parameter value and the second parameter value.

The present invention also relates to a crosstalk estimation unit, and to an access multiplexer or a network analyzer including such a crosstalk estimation unit.

Fig. 1

**Description**

The present invention relates to the estimation of crosstalk that affects a communication system.

Crosstalk is a major source of channel impairment for Multiple-Input Multiple-output (MIMO) communication systems, such as Digital subscriber Line (DSL) communication systems.

As the demand for higher data rates increases, DSL systems are evolving toward higher frequency bands, wherein crosstalk between neighboring transmission lines (that is to say, transmission lines forming part of the same cable binder) is more pronounced (the higher frequency, the more coupling).

A MIMO system can be described by the following linear model:

$$Y(f) = H(f)X(f) + Z(f) \quad (1)$$

wherein the N-component complex vector X, respectively Y, denotes a discrete frequency representation of the symbols transmitted over, respectively received from, the N lines, and wherein the N-component complex vector Z denotes some additional noise, such as alien noise or thermal noise, present over the N lines, and wherein the NxN complex matrix H is referred to as the channel matrix. The (i,j)-th component of the channel matrix H describes how the communication system produces a signal on the i-th channel in response to a symbol being transmitted to the j-th channel. The diagonal elements of the channel matrix describe direct channel coupling(s), and the off-diagonal elements of the channel matrix describe inter-channel coupling(s).

Different strategies, referred to as Dynamic spectrum Management (DSM), have been developed to mitigate crosstalk and to maximize effective throughput and line stability. DSM is gradually evolving from spectral management techniques (DSM level 0-2) to multi-user signal coordination (DSM level 3).

One technique for reducing inter-channel interferences is signal precoding (or vectoring). with precoding, signals are passed through an artificial precoding channel before being transmitted over the physical channel. The precoding channel is designed so that the concatenation of the precoder and the physical channel results in little or no interference at the receiver. Precoding can be performed within an access multiplexer or within an external pre-coding unit.

The performance of precoding depends critically on the parameters of the precoding channel, which parameters being computed according to the crosstalk channel coefficients as they are estimated.

A prior art method for estimating the crosstalk channel coefficients in the downstream direction comprises the steps of abusing the lines with some specific abuse signal, measuring signal to Noise plus Interference Ratio (SNIR) or slicer error at the customer Premise Equipment (CPE), reporting the so-measured SNIR or slicer error through a feedback channel to a crosstalk estimation unit, and thereupon estimating the amplitude and phase of the crosstalk channel coefficients.

The disclosed method is disadvantageous in that some feedback channel is required, making this solution not backward compatible with legacy CPES that do not support such a feedback channel, in that the algorithm relies on CPE measurements, the accuracy of which may fluctuate from manufacturer to manufacturer, and in that some abuse signal needs to be transmitted along with the regular payload, thereby stepping down the power budget available for regular transmission.

It is an object of the present invention to improve crosstalk estimation within a MIMO communication system.

The objectives of the present invention are achieved and the aforementioned shortcomings of the prior art are overcome by a method for estimating a first parameter that characterizes a first crosstalk channel from a first transmission medium towards a second transmission medium in a first direction of communication, and comprising the steps of:

- estimating a second alike parameter that similarly characterizes a second crosstalk channel from said second transmission medium towards said first transmission medium in a second opposite direction of communication and at a first frequency index, thereby yielding a first parameter value,
- estimating said second parameter at a second distinct frequency index, thereby yielding a second parameter value,
- deriving a value for said first parameter at a third distinct frequency index from interalia said first parameter value and said second parameter value.

The first and second transmission mediums are e.g. transmission lines, such as unshielded Twisted copper Pairs (UTP), coaxial cables, etc.

The first and second parameters are e.g. the amplitude or phase of the transfer function of the first and second crosstalk channel respectively.

The present invention is based on the insight that the first crosstalk channel from the first transmission medium towards the second transmission medium in the first direction of communication (e.g., downstream communication) and the second crosstalk channel from the second transmission medium towards the first transmission medium in the second direction of communication (e.g., upstream communication) exhibit similar characteristics. This is especially true when considering the phase of the crosstalk channel transfer function.

The noise measurements that are carried out at the receive-end of the second direction of communication, typically at a Central office (CO) or at a remote location whereat traffic from multiple users is aggregated, and that are typically used for determining carrier bit loadings and gains, and that may further be used for canceling crosstalk in one direction of communication, are now re-used for further estimating the crosstalk channel coefficients in the opposite direction of communication, thereby removing the need for any dedicated feedback channel and improving the operational autonomy of the estimation process.

Compared to the aforementioned prior art methods, the present invention relies on local and accurate measurement information that are supplied as such to the estimation process, without requiring any data compilation and/or compression for further transmission through a bandwidth-limited feedback channel that may affect the accuracy of the estimation process.

The present invention is further advantageous when new lines are joining a vectoring group. Assume an active line A and a new joining line N. By listening at the co side, we can estimate the crosstalk channel coefficient from line A into line N in the upstream direction (communication over the new line N does not even need to be initialized). Hence, the crosstalk channel coefficient from line N into line A in the downstream direction can be estimated as well. This means we can start up the line N and immediately compensate for the impact of the joining line N into the active line A. Thereafter, we can estimate the other reciprocal channel and seamless Rate Adaptation (SRA) can help the joining line to slowly come up in rate.

An alternative embodiment of a method according to the invention is characterized in that first frequency bands assigned to said first direction of communication and second frequency bands assigned to said second direction of communication closely alternate over said first and second transmission mediums.

The close interleaving of first (e.g., downstream) and second (e.g., upstream) frequency bands over the first and second transmission mediums (also referred to as a zippered band plan) improves the accuracy of the derivation step. As a matter of fact, the derivation error bias depends on how far apart are the first and second frequency indexes from the third frequency index: the narrower the first and second frequency bands, the closer the samples on which the estimation is based, the more accurate the crosstalk estimation. The derivation error is also a function of the algorithm (and the underlying crosstalk channel model) that is used for deriving the crosstalk channel coefficients.

In view of this, 'closely' is to be construed as 'close enough for the derivation error to remain within acceptable limits'.

This embodiment is particularly advantageous for orthogonal Frequency Division Multiplexing (OFDM) communication systems wherein orthogonality is preserved in both directions of communication, such as is the case for very high speed Digital subscriber Line (VDSL, VDSL2) communication systems, and for which upstream and downstream frequency bands may alternate every few tones.

Data carriers may be assigned following a periodic pattern. For instance, m and n carriers can alternatively be assigned to the first and second directions of communication respectively, m and n being non-null positive integers. That is to say, two consecutive first frequency bands are n carriers apart at most, and two consecutive second frequency bands are m carriers apart at most. Typical values for m and n are 1 (the bands alternate every tone), 2, 4, 8, etc.

Alternatively, the width of the first and second frequency bands may vary according to the frequency. For instance, the width can be computed as a function of the slope of variation of the parameter to be estimated: the lower the variation, the further apart the first and second frequency indexes can be from the third frequency index.

Furthermore, so as to comply with the band plans that have been standardized for legacy communication schemes, such as Asymmetric Digital Subscriber Line (ADSL, ADSL2+), the first and second frequency bands may alternate only from a particular frequency index upwards or within a particular frequency range.

A further embodiment of a method according to the invention is characterized in that said third frequency index is comprised between said first and second frequency indexes, and in that said value is derived from said first parameter value and said second parameter value by means of interpolation.

Interpolation (being linear or polynomial interpolation) combined with a closely spaced zippered band plan provides good results, especially for determining the amplitude of the crosstalk transfer function.

Still a further embodiment of a method according to the invention is characterized in that said third frequency index is lower or higher than both said first and second frequency indexes,

and in that said value is derived from said first parameter value and said second parameter value by means of extrapolation.

This embodiment is particularly useful for determining the phase of the crosstalk transfer function, which can be approximated as a linear function of the frequency.

Further characterizing embodiments are mentioned in the appended claims.

The present invention also relates to a crosstalk estimation unit for estimating a first parameter that characterizes a first crosstalk channel from a first transmission medium towards a second transmission medium in a first direction of communication.

A crosstalk estimation unit according to the invention is further adapted to:

- estimate a second alike parameter that similarly characterizes a second crosstalk channel from said second transmission medium towards said first transmission medium in a second opposite direction of communication and at a first frequency index, thereby yielding a first parameter value,
- estimate said second parameter at a second frequency index, thereby yielding a second parameter value,
- derive a value for said first parameter at a third frequency index from interalia said first parameter value and said second parameter value.

Such a crosstalk estimation unit can form part of an access multiplexer, an external precoding unit, or a network analyzer.

Embodiments of a crosstalk estimation unit according to the invention correspond with the embodiments of a method according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Finally, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or viceversa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:

- fig. 1 represents a MIMO data communication system,
- fig. 2 represents an access multiplexer according to the invention.

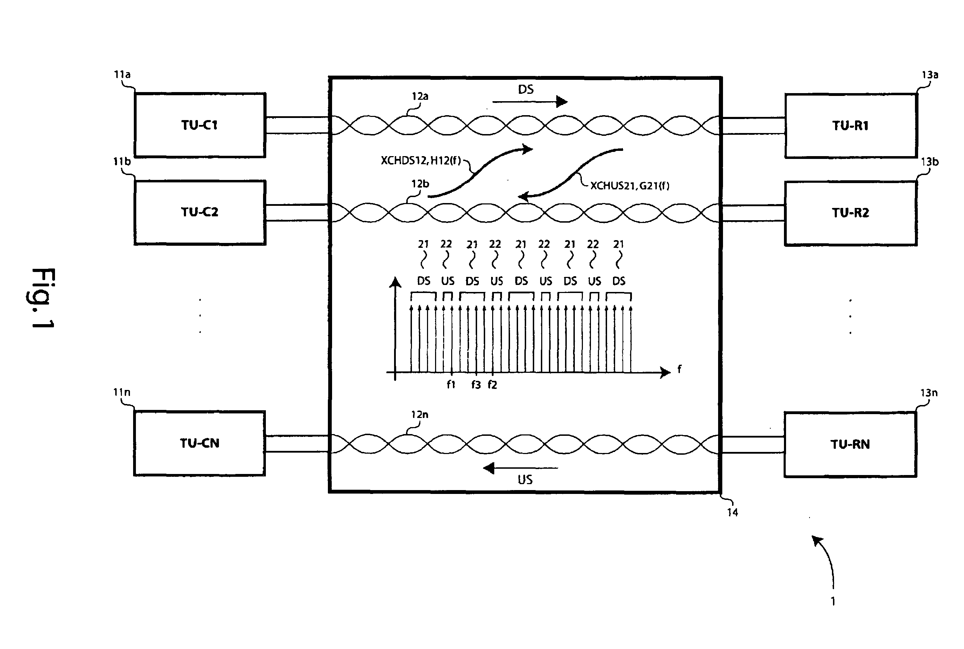

There is seen in fig. 1 a VDSL-based data communication system 1 comprising:

- N transceiver units 11 (TU_C1 to TU-CN) at a central location,
- N transceiver units 13 (TU_R1 to TU-RN) at remote locations, such as customer premises.

The transceiver units 11 form part of e.g. a Digital subscriber Line Access Multiplexer (DSLAM), and the transceiver units 13 are e.g. CPE, such as modems, gateways or set top boxes.

The transceiver units 11a to 11n are coupled to the transceiver units 13a to 13n through UTPs 12a to 12n respectively.

Data carriers 23 are assigned to either downstream (DS) or upstream (us) direction. There is seen in fig. 1 a particular frequency band plan wherein downstream frequency bands 21 and upstream frequency bands 22 closely alternate. This band plan is used over the transmission mediums 12.

The crosstalk channel from line j into line i in downstream direction is denoted as XCHDSij, and the corresponding crosstalk transfer function as Hij(f). The crosstalk channel from line j into line i in upstream direction is denoted as XCHUSij, and the corresponding crosstalk transfer function as Gij(f).

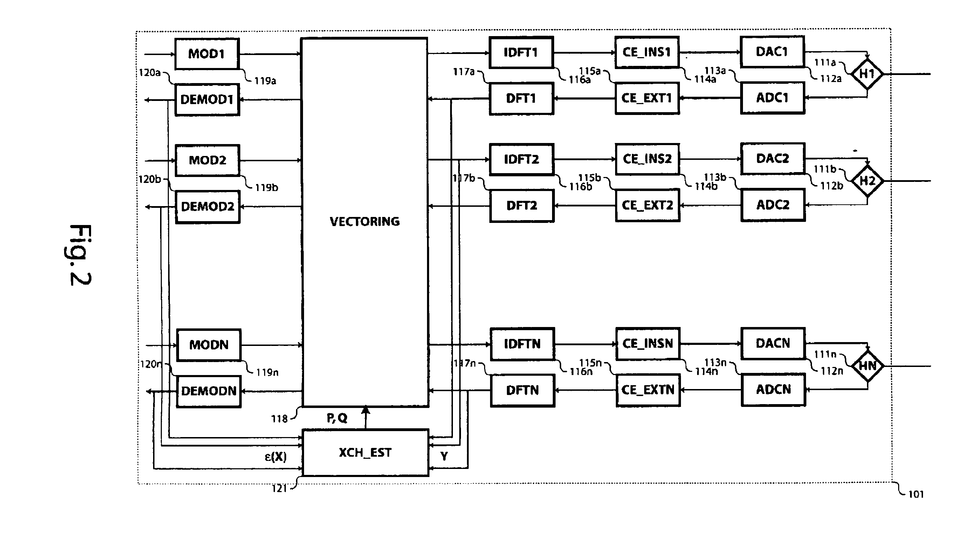

There is seen in fig. 2 an access multiplexer 101 according to the invention, the most noticeable elements of which are:

- N hybrid circuits 111 (H1 to HN),
- N Digital to Analog Converters 112 (DAC1 to DACN),
- N Analog to Digital Converters 113 (ADC1 to ADCN),
- N cyclic prefix and suffix insertion units 114 (CE_INS1 to CE_INSN),
- N cyclic prefix and suffix removal units 115 (CE_EXT1 to CE_EXTN),
- N Inverse Digital Fourier Transform units 116 (IDFT1 to IDFTN),
- N Digital Fourier Transform units 117 (DFT1 to DFTN),
- a vectoring unit 118 (VECTORING),
- N carriers QAM modulators 119 (MOD1 to MODN),

- N carriers QAM demodulators 120 (DEMOD1 to DEMODN),
- a crosstalk coefficient estimation unit 121 (XCH_EST).

output terminals of the hybrid circuits 111 are coupled to respective ones of input terminals of the ADC 113. Output terminals of the ADC 113 are coupled to respective ones of input terminals of the cyclic prefix and suffix extraction units 115. output terminals of the cyclic prefix and suffix extraction units 115 are coupled to respective ones of input terminals of the DFT units 117.

output terminals of the IDFT units 116 are coupled to respective ones of input terminals of the cyclic prefix and suffix insertion units 114. output terminals of the cyclic prefix and suffix insertion units 114 are coupled to respective ones of input terminals of the DACs 112. output terminals of the DACs 112 are coupled to respective ones of input terminals of the hybrid circuits 111.

The vectoring unit 118 is coupled to input terminals of the IDFT units 116, to output terminals of the DFT units 117, to output terminals of the QAM modulators 119, to input terminals of the QAM demodulators 120 and to the crosstalk coefficient estimation unit 121. The crosstalk coefficient estimation unit 121 is further coupled to output terminals of the DFT units 117 and to output terminals of the QAM demodulators 120.

The hybrid circuits 111 are adapted to couple the transceiver's outputs to the UTPs 12, and the UTPs 12 to the transceiver's inputs. The hybrid circuits 111 further include a means for DC-isolating the line signal from the transceiver's circuitry, and for adapting to the line characteristic impedance.

The DACs 112 are adapted to convert a discrete time sequence into an analog signal.

The ADCs 113 are adapted to sample an incoming analog signal and to encode a sample as a binary sequence.

The cyclic prefix and suffix insertion units 114 are adapted to append cyclic prefix and suffix to the time sequences as synthesized by the IDFT units 116 so as to reduce Inter symbol Interferences (ISI).

The cyclic prefix and suffix removal units 115 are adapted to delineate a data symbol from the received sequence, and to extract a portion thereof for further spectral decomposition by the DFT units 117.

The IDFT units 116 are adapted to synthesize a digital time sequence from its discrete frequency representation, e.g. by means of the Inverse Fast Fourier Transform (IFFT) algorithm.

The DFT units 117 are adapted to decompose a digital time sequence into discrete frequency components, e.g. by means of the Fast Fourier Transform (FFT) algorithm. The discrete frequency representation of the received data symbol, namely Y, is supplied to both the vectoring unit 118 and the crosstalk channel estimation unit 119.

The vectoring unit 118 is adapted to perform multi-user signal precoding in downstream direction, and multi-user crosstalk cancellation in upstream direction.

Signal precoding and crosstalk cancellation are achieved by jointly processing the transmitted or received symbols in the frequency domain so as to compensate for the inter-channel interferences.

The downstream channel matrix can be expressed as:

$$\mathbf{H} = \begin{bmatrix} H_{11} & H_{12} & \cdots & H_{1n} \\ H_{21} & H_{22} & & \vdots \\ \vdots & & & H_{n-1n} \\ H_{n1} & \cdots & H_{nn-1} & H_{nn} \end{bmatrix} = \begin{bmatrix} H_{11} & 0 & \cdots & 0 \\ 0 & H_{22} & & \vdots \\ \vdots & & & 0 \\ 0 & \cdots & 0 & H_{nn} \end{bmatrix} + \begin{bmatrix} 0 & H_{12} & \cdots & H_{1n} \\ H_{21} & 0 & & \vdots \\ \vdots & & & H_{n-1n} \\ H_{n1} & \cdots & H_{nn-1} & 0 \end{bmatrix}$$

$$\mathbf{H} = \mathbf{D} + \mathbf{C} = \mathbf{D}(\mathbf{I} + \mathbf{D}^{-1}\mathbf{C}) \quad (2)$$

wherein D denotes the diagonal matrix that contains the downstream direct channel transfer functions, C denotes the off-diagonal matrix that contains the downstream crosstalk channel transfer functions, and I is the identity matrix given by:

$$\mathbf{I} = \begin{bmatrix} 1 & 0 & \cdots & 0 \\ 0 & 1 & & \vdots \\ \vdots & & & 0 \\ 0 & \cdots & 0 & 1 \end{bmatrix}$$

Precoding should ideally result in a transfer function matrix that preserves the direct channel transfer functions (frequency equalization at the receive-end compensates for the direct channel attenuation and phase shift) and simultaneously zeroes all the crosstalk channel transfer functions. This is achieved by using the following preceding matrix:

$$P=(I+D^{-1}C)^{-1}\simeq I-D^{-1}C \quad (3)$$

The latter is a first order approximation that is valid if the amplitude of the crosstalk channel coefficients is small with respect to the amplitude of the direct channel coefficients, which is a rather good approximation in DSL environments.

Let us denote the relative crosstalk channel matrix as $\tilde{C}$. $\tilde{C}$ is given by:

$$\tilde{C}=D^{-1}C=\begin{bmatrix} 0 & H_{12}/H_{11} & \cdots & H_{1n}/H_{11} \\ H_{21}/H_{22} & 0 & & \vdots \\ \vdots & & & H_{n-1n}/H_{n-1n-1} \\ H_{n1}/H_{nn} & \cdots & H_{nn-1}/H_{nn} & 0 \end{bmatrix} \quad (4)$$

The received signal with precoding is then given by:

$$Y'=HPX+Z=D(I+\tilde{C})(I-\tilde{C})X+Z=D(I-\tilde{C}^2)X+Z\simeq DX+Z \quad (5)$$

That is to say, with precoding, the received signals are not impaired by inter-channel interferences but only by alien noise.

A similar derivation is used for upstream crosstalk cancellation with an upstream channel matrix G and a cancellation matrix Q.

The QAM modulators 119 are adapted to modulate the downstream carriers, and more specifically are adapted to determine a particular amplitude and phase of a carrier according to the binary sequence to be transmitted over that carrier (the length of which matches the carrier bit loading).

The QAM de-modulators 120 are adapted to recover a binary sequence from the amplitude and phase of a QAM-modulated carrier by selecting the closest match within a demodulation grid. The demodulators 120 provide the crosstalk coefficient estimation unit 121 with an estimate of the transmitted data symbol, namely e(x).

The crosstalk coefficient estimation unit 121 is adapted to estimate both the amplitude and phase of the upstream crosstalk coefficients. Multi-user channel estimation techniques may involve the slicer error and maximum-likelihood estimators, generalized decision feedback algorithms, etc. The slicer error is the difference between the frequency components as they are synthesized by the DFT units 117, namely Y, and the frequency components as they are estimated by the demodulators 120, namely $\varepsilon(X)$.

The crosstalk coefficient estimation unit 121 is further adapted to derive both the amplitude and phase of the downstream crosstalk coefficients based on two or more close-enough upstream channel coefficients as previously estimated. The derivation makes use of linear and/or polynomial interpolation and/or extrapolation. The close interleaving of the upstream and downstream frequency bands as depicted in fig. 1 helps in doing so.

Referring back to fig. 1, let us denote G21(f1) and G21(f2) the upstream crosstalk coefficients from line 12a towards line 12b as estimated by the estimation unit 121 at frequency indexes f1 and f2 respectively. Let us denote H12 (f3) the downstream coefficient from line 12b towards line 12a as to be estimated at a third frequency index f3.

Linear interpolation from the amplitude and phase of G21(f1) and G21(f2) yields:

$$|H_{12}(f3)|=|G_{21}(f1)|+\frac{f3-f1}{f2-f1}(|G_{21}(f2)|-|G_{21}(f1)|) \quad (6)$$

wherein |x| and Arg(x) denote the amplitude and phase of the complex number x respectively.

Alternatively, linear interpolation in the complex plane yields:

$$|H_{12}(f3)|=|G_{21}(f1)+\frac{f3-f1}{f2-f1}(G_{21}(f2)-G_{21}(f1))| \quad (8)$$

$$Arg(H_{12}(f3)) = Arg(G_{21}(f1) + \frac{f3-f1}{f2-f1}(G_{21}(f2) - G_{21}(f1))) \quad (9)$$

The frequency index f3 may be lower than f1 or higher than f2, in which case extrapolation is used. Extrapolation provides good result for estimating the phase of the downstream crosstalk coefficients without necessarily requiring a zippered band plan.

Polynomial interpolation (or other derivation algorithms known to the person skilled in the art) can alternatively be used for deriving the amplitude and/or phase of the downstream crosstalk coefficients.

The crosstalk coefficient estimation unit 121 is eventually adapted to compute the precoding matrix P and the cancellation matrix Q, given the upstream and downstream crosstalk channel coefficients as previously estimated. The so-computed precoding matrix P and cancellation matrix Q are supplied to the vectoring unit 118 for signal precoding (downstream) and crosstalk cancellation (upstream).

The remote transceiver units 13 may also transmit a pilot signal over a few upstream carriers, that is to say a signal with a pre-determined (not necessarily constant) amplitude and phase. If so, the estimation unit 121 does not need to be coupled to the demodulators 120 since the transmitted sequence is preliminary known at those pilot frequencies. The pilot carriers can be selected among the upstream carriers, or can be selected from a downstream band and re-assigned to upstream communication (provided they are shut down in downstream direction).

Although the preferred embodiment has been described in connection with the derivation of the downstream crosstalk coefficients from the upstream crosstalk coefficients, the present invention may similarly apply to the derivation of the upstream crosstalk coefficients from the downstream crosstalk coefficients. This embodiment may find applications in CPE for line bonding, wherein upstream data symbols transmitted over multiple bonded lines may be jointly precoded so as to mitigate upstream crosstalk between those bonded lines.

In an alternative embodiment of the present invention, the crosstalk coefficient estimation unit 121 is remotely coupled to the access multiplexer, e.g. via a data communication network.

In still an alternative embodiment of the present invention, the crosstalk coefficient estimation unit 121 forms part of a network analyzer. The derivation of the downstream and/or upstream crosstalk coefficients can be used for e.g. identifying the stronger crosstalkers within a cable binder and/or for network planning and/or for troubleshooting.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

while the principles of the invention have been described above in connection with specific apparatus, it is to be clearly understood that this description is made only by way of example and not as a limitation on the scope of the invention, as defined in the appended claims.

**Claims**

1.  A method for estimating a first parameter ($|H12(f)|$, arg(H12(f))) that characterizes a first crosstalk channel (XCHDS12) from a first transmission medium (12b) towards a second transmission medium (12a) in a first direction of communication (DS),
    *wherein* the method comprises the steps of:

    - estimating a second alike parameter ($|G21(f)|$, arg(G21(f))) that similarly characterizes a second crosstalk channel (XCHUS21) from said second transmission medium towards said first transmission medium in a second opposite direction of communication (us) and at a first frequency index (f1), thereby yielding a first parameter value ($|G21(f1)|$, arg(G21(fl))),
    - estimating said second parameter at a second distinct frequency index (f2), thereby yielding a second parameter value ($|G21(f2)|$, arg(G21(f2))),
    - deriving a value ($|H12(f3)|$, arg(H12(f3))) for said first parameter at a third distinct frequency index (f3) from said first parameter value and said second parameter value.

2.  A method according to claim 1, *wherein* first frequency bands (21) assigned to said first direction of communication and second frequency bands (22) assigned to said second direction of communication closely alternate over said first and second transmission mediums.

3.  A method according to any of the preceding claims, *wherein* said third frequency index is comprised between said first and second frequency indexes,
*and wherein* said value is derived from said first parameter value and said second parameter value by means of interpolation.

4. A method according to any of the preceding claims, *wherein* said third frequency index is lower or higher than both said first and second frequency indexes,
*and wherein* said value is derived from said first parameter value and said second parameter value by means of extrapolation.

5. A method according to any of the preceding claims, *wherein* said first and second parameters are phases of the transfer function of said first and second crosstalk channel respectively.

6. A crosstalk estimation unit (121) for estimating a first parameter (|H12(f)|, arg(H12(f))) that characterizes a first crosstalk channel (XCHDS12) from a first transmission medium (12b) towards a second transmission medium (12a) in a first direction of communication (DS),
*wherein* the crosstalk estimation unit is further adapted to:

- estimate a second alike parameter (|G21(f)|, arg(G21(f))) that similarly characterizes a second crosstalk channel (XCHUS21) from said second transmission medium towards said first transmission medium in a second opposite direction of communication (us) and at a first frequency index (f1), thereby yielding a first parameter value (|G21(f1)|, arg(G21(f1))),
- estimate said second parameter at a second distinct frequency index (f2), thereby yielding a second parameter value (| G21(f2)|, arg(G21(f2))),
- derive a value (|H12(f3)|, arg(H12(f3))) for said first parameter at a third distinct frequency index (f3) from said first parameter value and said second parameter value.

7. An access multiplexer (101) comprising the crosstalk estimation unit according to claim 7.

8. A network analyzer comprising the crosstalk estimation unit according to claim 7.

Fig. 1

Fig. 2

Europäisches
Patentamt

European
Patent Office

Office européen
des brevets

## EUROPEAN SEARCH REPORT

Application Number

EP 07 29 1200

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/057806 A (ACTELIS NETWORKS ISRAEL LTD [IL]; BAR-EL MAYA [IL]; LITICHEVER ZEEV [I) 23 June 2005 (2005-06-23)<br>* abstract; figures 1-4 *<br>* page 2, line 13 - page 6, line 5 *<br>* page 7, line 7 - line 22 *<br>* page 8, line 5 - line 17 *<br>* page 9, line 18 - line 21 *<br>----- | 1-8 | INV.<br>H04M3/30 |
| X | EP 1 109 328 A (ST MICROELECTRONICS SA [FR]; ST MICROELECTRONICS NV [NL]) 20 June 2001 (2001-06-20)<br>* abstract; figures 1,2,6 *<br>* paragraph [0017] - paragraph [0027] *<br>----- | 1-8 | |
| A | US 2004/157566 A1 (FISHMAN ILYA M [US]) 12 August 2004 (2004-08-12)<br>* abstract; figure 4 *<br>* paragraph [0052] *<br>----- | 1-8 | |

|  |  |
|---|---|
| | TECHNICAL FIELDS SEARCHED (IPC) |
| | H04M<br>H04B |

The present search report has been drawn up for all claims

| Place of search | Date of completion of the search | Examiner |
|---|---|---|
| Munich | 13 January 2009 | Ohanovici, Z |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 07 29 1200

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2009

| Patent document cited in search report | | Publication date | Patent family member(s) | | Publication date |
|---|---|---|---|---|---|
| WO 2005057806 | A | 23-06-2005 | AU | 2003288490 A1 | 29-06-2005 |
| | | | US | 2007217489 A1 | 20-09-2007 |
| EP 1109328 | A | 20-06-2001 | DE | 69915082 D1 | 01-04-2004 |
| | | | JP | 2001237747 A | 31-08-2001 |
| | | | US | 2001004383 A1 | 21-06-2001 |
| US 2004157566 | A1 | 12-08-2004 | NONE | | |

EPO FORM P0459

For more details about this annex : see Official Journal of the European Patent Office, No. 12/82